# EUROPEAN PATENT SPECIFICATION

(11) **EP 0 814 551 B1**
(45) Date of publication and mention of the grant of the patent: **04.10.2001**
(21) Application number: 97110044.1
(22) Date of filing: 19.06.1997
(51) Int. Cl.: H02B 1/056, H01R 13/18

(54) **Contact bar having sockets and a ganged plug-in unit having such a contact bar**
Kontaktschiene mit Buchsenleisten und steckbare Baugruppe mit solcher Kontaktschiene
Barre de contact avec fiches femelles et module enfichable possédant une telle barre

(30) Priority: 19.06.1996 DE 19624511
(43) Date of publication of application: 29.12.1997
(73) Proprietor: FRAMATOME CONNECTORS INTERNATIONAL, 92400 Courbevoie (FR)
(72) Inventor: Ritter,Friedhelm, 40699 Erkrath (DE)
(74) Representative: Beetz & Partner Patentanwälte

(56) References cited:
- WO-A-95/11533
- DE-A- 1 946 714
- DE-A- 2 639 642
- FR-A- 1 276 672
- FR-A- 2 292 349
- GB-A- 2 036 437
- US-A- 3 588 620

## Description

This invention relates to a contact bar having plug-in sockets as set out in the preamble of claim 1. It also relates to a ganged plug-in unit which uses such a contact bar. Such contact bars and ganged plug-in units are used more particularly in the installation of networks where currents of the order of magnitude of several amperes at a voltage of several hundred volts flow. The protection features required in such installations usually consist of a number of automatic cut-outs arranged as ganged plug-in units on a panel in a switch box. If the overall depth and other dimensions of this arrangement are to be as compact as possible, the important consideration is for the spring contacts and contact blades to be very low and for them to be arranged beside one another as compactly as possible.

Prior art document GB-A-2 036 437 discloses several pairs of sockets integral with a bus bar, the sockets consisting of two opposed spring arms and extending combwise from the bus bar.

Prior art document FR-A-1 276 672 discloses a connector having two opposed U-shaped legs and an overspring super imposed over said legs.

It is the object of the invention to provide a contact bar having spring contacts and sockets and a ganged plug-in unit having such a contact bar which is simple to manipulate and is very flat and compact.

This problem is solved in accordance with claim 1.

The sub-claims disclose preferred embodiments of the contact bar and ganged plug-in unit according to the invention.

An embodiment of the invention will be described in greater detail hereinafter with reference to the drawings wherein:
Figures 1a and 1b are each a view in section through a ganged plug-in unit, the view being taken transversely through a socket;
Figure 2 is a partly sectioned view in side elevation of a web with the outer spring assembled;
Figure 3 is a plan view of a contact bar with webs and sockets;
Figure 4 is a plan view of a ganged plug-in unit casing with its cover removed;
Figure 5 shows a cover for the unit of Figure 4;
Figure 6 is a section on the line A - B of Figure 5 and a detailed view of the bevelled contact blades, and
Figure 7 is a plan view of a three-pole embodiment of a ganged plug-in unit according to the invention.

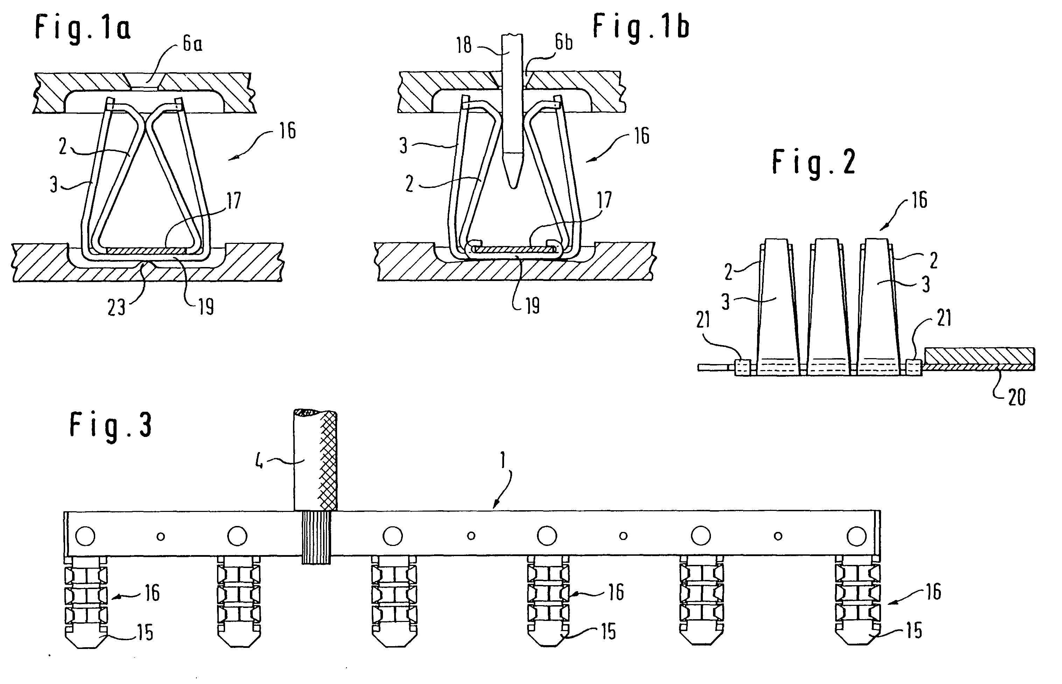

Figure 1a is a view in cross-section of a socket 16. Some of the cover of the plug-in unit casing is shown above the socket 16 and is formed with an entry for a contact blade. The casing cover and the casing base are slightly recessed at the places where the sockets 16 are disposed in order to facilitate adjustment of the arrangement and to reduce overall height. Socket 16 has resilient first spring arms 2 which are good electrical conductors and which extend upwards at a diagonal inclination towards one another from a baseplate 17 and extend out apart from one another funnel-fashion at the top. The introduction of a blade contact 18 is therefore facilitated. The ends of the spring arms are so pressed towards one another by second spring arms 3 forming an overspring that in the absence of blade contact the entry end of the socket 16 is kept substantially closed by the pressed-together first spring arms 2. The second spring arms 3 have a baseplate 19 and their arms extend upwards at a reduced inclination to one another.

Depending upon the construction the baseplate 17 of the socket 16 serves as a web welded to a power bar 1 or the whole consists of a step-rolled part in which the bar 1 and the webs and therefore the baseplate sockets and their first spring arms are made of the same material rolled or punched in different thicknesses.

Figure 1b shows a socket 16 with a blade contact 18 half-inserted. As will be apparent, in this position the overspring arms are pressed slightly apart from one another so that the spring force to be overcome consists of the spring force of the first spring arms and the spring force of the spring arms of the overspring.

Figure 2 is a view of a socket in side elevation. In this embodiment the webs are connected unitarily in comb fashion to a sheet metal member which has the dimensions of the bar 1 and which is welded thereto. The socket has three spring arm pairs over which three respective overspring arm pairs engage. The overspring 3 has a unitary baseplate 19 having at its four corners tabs 21 which extend over the baseplate 17 in order to secure the overspring to the web 15.

It has been found very advantageous to provide three spring arm pairs since this number provides optimum contact with the contact blade in the event of irregularities occurring because of twisting or of being fitted in a tilted position. As can be seen in Figure 1, to give the sockets some freedom to twist around a longitudinal axis, ribs 23 enabling the webs 15 to twist or tilt around their longitudinal axes are disposed in the base of the plug-in unit casing parallel to the longitudinal axis of the webs 15. The same effect can be achieved by a reversal - i.e., a flat casing support and a spherical spring base.

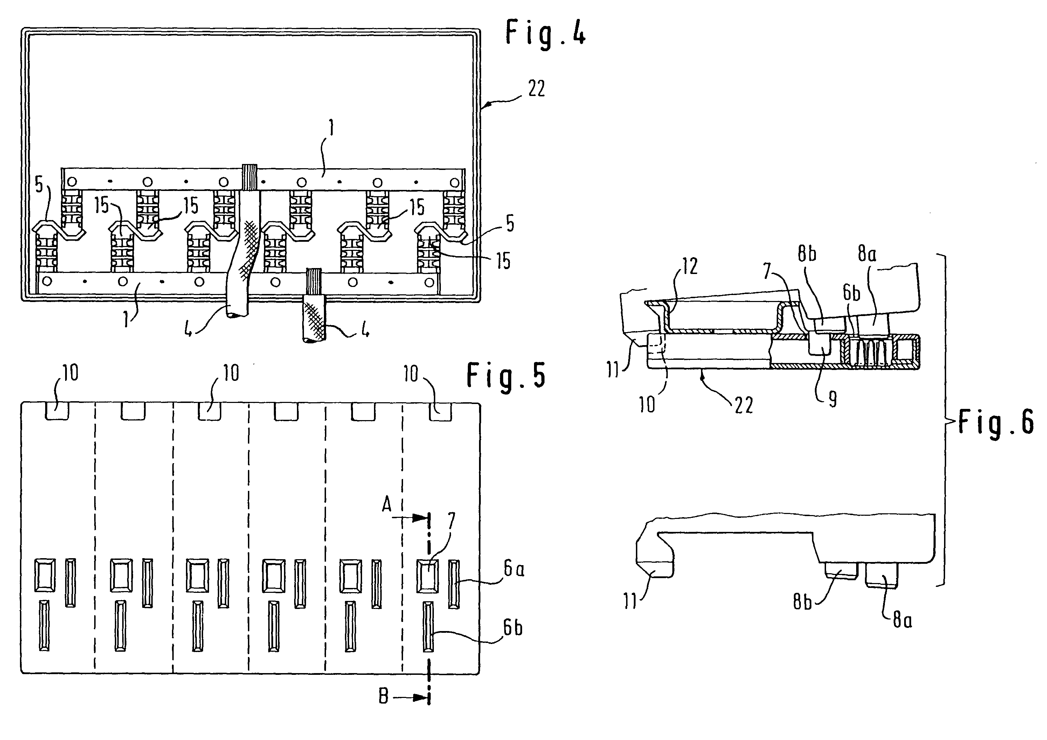

Figure 3 is a plan view of a contact bar which has sockets. There can be seen the power bar 1 which is connected by a number of spot welds to a comb consisting of a number of unitary webs 15. A cable connection 4 is welded to the bar 1. As is shown, for example in Figure 4, there is room for at least two such contact bars in a casing 22. The connecting cables are led out of the casing on the same side and the casing base has S-shaped partition segments which facilitate the positioning of the contact bars and provide reliable insulation between the web tips. The two contact bars shown are in this case so disposed as to engage slightly in one another.

Figure 5 shows the cover associated with the casing of Figure 4. As will be apparent, six module segments each having two sockets and locating pins are shown. The slots 6a, 6b are disposed opposite the sockets 16 whereas the apertures 7 for the locating pins 9 ensure that the companion elements are accurately arranged in space.

In the particular case illustrated the companion elements are electrical appliances which, as shown in Figure 6, are disposed on a fixing bar 12 and plug into the ganged plug-in units. To this end, a locating pin 11 first engages in a recess 10 in the plug-in unit casing till the electrical appliance engages the edge of the bar 12, whereafter the opposite end of the appliance is so pressed down that the contact blades engage in the sockets. Also, the locating pin 9 engages in the associated aperture 7.

As Figure 6 also shows, the contact blades have a slightly curved front edge so oriented as also to make contact with the entry ends of the spring arms during the inwards pivoting movement.

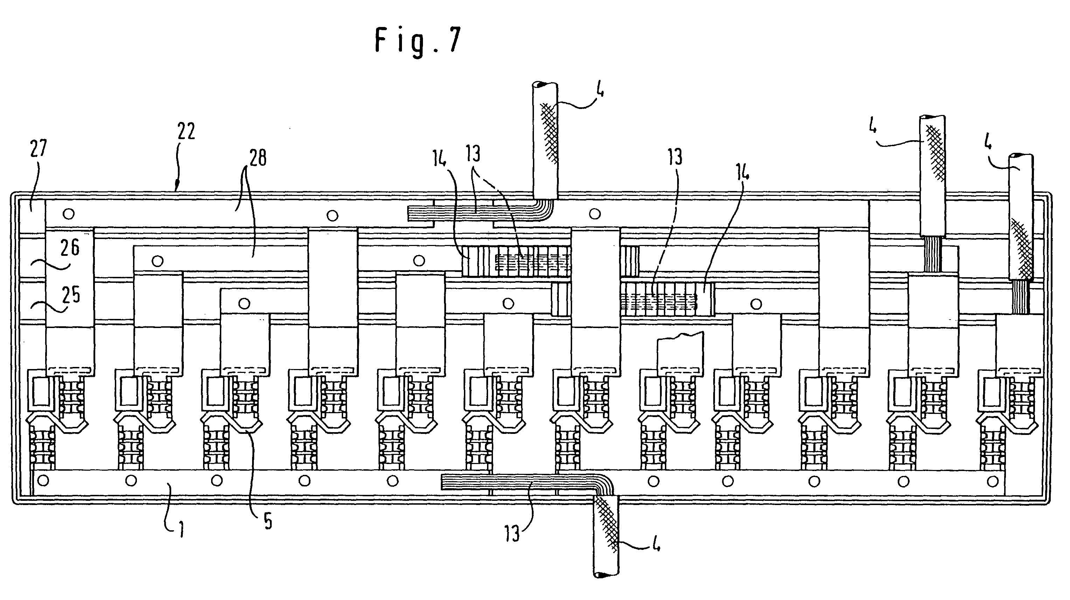

Figure 7 shows a three-pole construction of a plug-in unit casing according to the invention, the power bars 25, 26, 27 and the neutral bars 28 being flexibly interconnected by way of a respective stranded wire 13 and connecting wire 4. As in the example hereinbefore described the connecting wires 4 are welded to the power bars. To insulate the power bars or webs from one another, they can be coated wholly or in part on one or both sides with a plastics film. In Figure 7 the insulation is provided near the connection to the stranded wire 13 by the provision of a plastics cap 14.

The description of this embodiment serves merely to explain the invention defined in the claims.

## Claims

1. A contact bar having plug-in sockets, with a power bar
(1) from which webs (15) extend laterally combwise, plug-in sockets (16) being devised on the webs (15), the sockets (16) having resilient first spring arms (2) which extend upwards, from a baseplate (17) which either forms or is connected to the webs (15), at an inclination towards one another as far as their plug-in end where they are bent round to widen funnel-fashion to facilitate the entry of a blade contact (18),
**characterised in that**
each spring arm pair (2) has an overspring (3) which also has second spring arms covering a large part of the first spring arms and starting from a unitary baseplate (18) in a corresponding number, the second spring arms pressing the first spring arms (2) together at their ends, and the overspring (3) has a baseplate (19) at whose four corners a tab (21) engages over the baseplate of the first spring arms (17) in order to secure the overspring on the latter baseplate.

2. A contact bar according to claim 1,
**characterised in that**
each socket (16) has six first and second spring arms (2, 3).

3. A contact bar according to claim 1 or 2,
**characterised in that**
the webs (15) are integral with the first spring arms (2) and with a bar (20) welded to the power bar (1).

4. A contact bar according to any of claims 1 to 3,
**characterised in that**
the webs are unitarily connected in comb-fashion to a sheet of metal member, the whole consisting of a step-rolled part in which the power bar and the webs and, therefore, the baseplate sockets and their first spring arms are made of the same material rolled or punched in different thicknesses.

5. A contact bar according to any of claims 1 to 4,
**characterised in that**
the baseplate (17) of the sockets (16) is pivotable around the longitudinal axis of the webs.

6. A contact bar according to any of claims 1 to 5,
**characterised in that**
a pluggable or permanently welded line connection (4) is provided on the power bar (1).

7. A ganged plug-in unit having a contact bar according to any of claims 1 to 6,
**characterised in that**
at least two contact bars are so disposed in a casing (22) that the webs (15) of different bars (1) are disposed in toothed relationship to one another, their front ends being insulated from one another by partitions (5) anchored in the casing.

8. A ganged plug-in unit according to claim 7,
**characterised in that**
the sockets (16) are mounted on a rib (23) formed parallel to their longitudinal axis in the casing base and permitting twisting of the socket.

9. A ganged plug-in unit according to claim 7 or 8,
**characterised in that**
slots (6a, 6b) opposite the sockets and additional apertures (7, 10) for locating pins (9, 11) are present on the top of the casing (22).

10. A ganged plug-in unit according to claim 9,
**characterised in that**
the companion elements are automatic cut-outs and the same are secured to a fixing bar (12) on the top of the casing and are located by means of the locating pins (9).

11. A ganged plug-in unit according to claim 10,
**characterised in that**
the automatic cut-outs can be hung by way of their sides opposite the slots (6a, 6b) on the fixing bar (12), whereafter the contact blades (8a, 8b) and the locating pin (9) can be pivoted into the slots (6a, 6b) and adjusting aperture (7) respectively, the end edges of the contact blades (8a, 8b) being bevelled so that all the contacting points on the end edge of the contact blades (8a, 8b) engage simultaneously in each socket (16).

12. A ganged plug-in unit according to any of claims 7 to 11,
**characterised in that**
three contact bars (1) are provided for a three-pole construction, their webs (15) being so devised in part as to be able to bridge an adjacent power bar (1) without contacting it.

13. A ganged plug-in unit according to claim 12,
**characterised in that**
the power bar and parts of the webs (15) are covered by a protective plastics cap (14) for insulation.

14. A ganged plug-in unit according to claim 12,
**characterised in that**
the power bar and parts of the webs (15) are coated with an insulating plastics film.

15. A ganged plug-in unit according to any of claims 7 to 11,
**characterised in that**
the power bars (25, 26, 27) and neutral bars (28) are respectively interconnected flexibly by way of a stranded wire (13) and connecting wire (4) respectively.

## Patentansprüche

1. Kontaktschiene mit Steckerbuchsen, mit einer Leistungsschiene (1), von der sich kammartig seitliche Stege (15) erstrecken, wobei Stekkerbuchsen (16) an den Stegen (15) ausgebildet sind, wobei die Steckerbuchsen (16) erste elastische Federarme (2) aufweisen, die sich von einer die Stege (15) bildenden bzw. mit diesen verbundenen Bodenplatte (17) schräg nach oben aufeinander zu geneigt bis zu ihrem Einsteckende erstrecken, wo sie trichterförmig aufgeweitet umgebogen sind, um das Einführen eines Messerkontakts (18) zu erleichtern,
**dadurch gekennzeichnet, daß**
jedes Federarmpaar (2) eine Überfeder (3) aufweist, die ebenso zweite Federarme aufweist, die einen großen Abschnitt der ersten Federarme bedecken und in entsprechender Anzahl von einer gemeinsamen Bodenplatte (18) ausgehen, wobei die zweiten Federarme die ersten Federarme (2) an ihren Enden gegeneinanderpressen, wobei die Überfeder (3) eine Bodenplatte (19) aufweist, von deren vier Ecken jeweils eine Lasche (21) über die Bodenplatte der ersten Federarme (17) übergreift, um die Überfeder daran zu befestigen.

2. Kontaktschiene nach Anspruch 1, **dadurch gekennzeichnet, daß** jede kontaktbuchse sechs erste und zweite Federarme (2, 3) aufweist.

3. Kontaktschiene nach Anspruch 1 oder 2, **dadurch gekennzeichnet, daß** die Stege (15) einstückig mit den ersten Federarmen (2) und einer Schiene (20) geformt sind, die auf die Leistungsschiene (1) aufgeschweißt ist.

4. Kontaktschiene nach einem der Ansprüche 1 bis 3, **dadurch gekennzeichnet, daß** die Stege einheitlich kammartig mit einem Metallstück verbunden sind, wobei das Ganze aus einem stufengewalzten Teil besteht, bei dem die Leistungsschiene und die Stege und somit auch die Steckerbuchsen der Bodenplatte sowie deren erste Federarme aus demselben Material sind, welches mit unterschiedlicher Dicke gewalzt oder gestanzt ist.

5. Kontaktschiene nach einem der Ansprüche 1 bis 4, **dadurch gekennzeichnet, daß** die Bodenplatte (17) der Steckerbuchsen (16) um die Längsachse der Stege verschwenkbar ist.

6. Kontaktschiene nach einem der Ansprüche 1 bis 5, **dadurch gekennzeichnet, daß** ein steckbarer oder permanent verschweißter Leitungsanschluß (4) auf der Leistungsschiene (1) vorgesehen ist.

7. Steckmodul mit einer Kontaktschiene nach einem der Ansprüche 1 bis 6, **dadurch gekennzeichnet, daß** mindestens zwei Kontaktschienen in einem Gehäuse (22) so angeordnet sind, **daß** die Stege (15) unterschiedlicher Schienen (1) miteinander verzahnt angeordnet sind, wobei deren Vorderenden voneinander durch im Gehäuse verankerte Trennwände (5) isoliert sind.

8. Steckmodul nach Anspruch 7, **dadurch gekennzeichnet, daß** die Steckerbuchsen (16) auf einer zu ihrer Längsachse parallelen im Gehäuseboden geformten Rippe (23) gelagert sind, die eine Verschränkung der Buchse erlaubt.

9. Steckmodul nach einem der Ansprüche 7 oder 8, **dadurch gekennzeichnet, daß** auf der Oberseite des Gehäuses (22) den Steckerbuchsen gegenüberliegende Schlitze (6a, 6b) sowie zusätzliche Öffnungen (7, 10) für Positionierstifte (9, 11) vorgesehen sind.

10. Steckmodul nach Anspruch 9, **dadurch gekennzeichnet, daß** die Gegenstücke Sicherungsautomaten sind und **daß** diese auf einer Befestigungsschiene (12) auf der Gehäuseoberseite fixiert und über die Positionierstifte (9) positioniert werden.

11. Steckmodul nach Anspruch 10, **dadurch gekennzeichnet, daß** die Sicherungsautomaten mit ihren den Schlitzen (6a, 6b) gegenüberliegenden Seiten an der Befestigungsschiene einhängbar sind und dann die Kontaktmesser (8a, 8b) und der Positionerstift (9) in die Schlitze (6a, 6b) bzw. in die Justieröffnung (7) einschwenkbar sind, wobei die Stirnkanten der Kontaktmesser (8a, 8b) abgeschrägt sind, so **daß** ein gleichzeitiges Eingreifen aller Kontaktierungspunkte auf der Stirnkante der Kontaktmesser (8a, 8b) in jede Kontaktbuchse (16) erfolgt.

12. Steckmodul nach einem der Ansprüche 7 bis 11, **dadurch gekennzeichnet, daß** drei Kontaktschienen für eine dreipolige Ausführung vorgesehen sind, deren Stege teilweise so ausgeführt sind, **daß** sie eine benachbarte Leistungsschiene (1) berührungsfrei überbrücken können.

13. Steckmodul nach Anspruch 12, **dadurch gekennzeichnet, daß** die Leistungsschiene und Teile der Stege (15) mit einer Kunststoffkappe (14) zur Isolierung abgedeckt sind.

14. Steckmodul nach Anspruch 12, **dadurch gekennzeichnet, daß** die Leistungsschiene und Teile der Stege (15) mit einem Kunststoffilm zur Isolierung beklebt sind.

15. Steckmodul nach einem der Ansprüche 7 bis 11, **dadurch gekennzeichnet, daß** die Leistungsschienen (25, 26, 27) bzw. Neutralschienen (28) über einen Litzendraht (13) bzw. Anschlußdraht (4) flexibel miteinander verbunden sind.

## Revendications

1. Barre de contact ayant des fiches femelles enfichables, comportant une barre d'alimentation (1) à partir de laquelle s'étendent latéralement des languettes (15) à la manière d'un peigne, les fiches femelles enfichables (16) étant réparties sur les languettes (15), les fiches femelles (16) ayant des premiers bras à ressort élastique (2) qui s'étendent vers le haut, à partir d'une base (17) qui soit forme les languettes (15) soit y est connectée, selon une inclinaison l'un par rapport à l'autre permettant à leur extrémité enfichable, à l'extrémité de laquelle ils sont recourbés en arrondi, de manière à former une armature en forme d'entonnoir pour faciliter l'entrée d'une lame de contact (18), **caractérisée en ce que** chaque paire de bras à ressort (2) possède un ressort cage (3) qui a également des seconds bras à ressort couvrant une grande partie des premiers bras à ressort et prenant naissance à partir de la base unitaire (18) en nombre correspondant, les seconds bras à ressort pressant les premiers bras à ressort (2) à leurs extrémités, et le ressort cage (3) a une embase (19) aux quatre coins de laquelle un taquet (21) s'engage au-dessus de la base des premiers bras à ressort (17) afin de fixer le ressort cage sur la dernière embase.

2. Barre de contact selon la revendication 1, **caractérisée en ce que** chaque fiche femelle (16) possède six premiers et seconds bras (2, 3).

3. Barre de contact selon la revendication 1 ou 2, **caractérisée en ce que** les languettes (15) sont solidaires des premiers bras à ressort (2) et d' une barre (20) soudée à la barre d'alimentation (1).

4. Barre de contact selon l'une quelconque des revendications 1 à 3, **caractérisée en ce que** les languettes sont connectées de façon unitaire à la manière d'un peigne à une feuille d'élément métallique, le tout constituant une partie laminée par pas dans laquelle la barre d'alimentation et les languettes et, en plus, la base des fiches femelles et leurs premiers bras ressort sont fabriqués à partir du même matériau laminé ou découpé d'épaisseurs différentes.

5. Barre de contact selon l'une quelconque des revendications 1 à 4, **caractérisée en ce que** la base (17) des fiches femelles (16) peut pivoter par rapport à l'axe longitudinal des languettes.

6. Barre de contact selon l'une quelconque des revendications 1 à 5, **caractérisée en ce qu'**un câble de connexion (4) enfichable ou soudé définitivement est apposé sur la barre d'alimentation (1).

7. Module enfichable jumelé ayant une barre de contact selon l'une quelconque des revendications 1 à 6, **caractérisé en ce que** deux barres de contact au moins sont disposées dans un boîtier (22) de telle manière que les languettes (15) des différentes barres (1) soient disposées dans une configuration semblable à des dents, leurs extrémités avant étant isolées les unes par rapport aux autres par des séparations (5) ancrées dans le boîtier.

8. Module enfichable jumelé selon la revendication 7, **caractérisé en ce que** les fiches femelles (16) sont montées sur une nervure (23) formée parallèlement à leur axe longitudinal dans la base du boîtier et permettant l'oscillation de la fiche femelle.

9. Module enfichable jumelé selon la revendication 7 ou 8, **caractérisé en ce que** des fentes (6a, 6b) en face des fiches femelles et des ouvertures supplémentaires (7, 10) pour les pions d'indexage (9, 11) sont présentes sur le haut du boîtier (22).

10. Module enfichable jumelé selon la revendication 9, **caractérisé en ce que** les éléments auxiliaires sont des coupe-circuits automatiques et que ceux-ci sont ancrés à une barre de fixation (12) sur le haut du boîtier et sont positionnés au moyen des pions d'indexage (9).

11. Module enfichable jumelé selon la revendication 10, **caractérisé en ce que** les coupe-circuits automatiques peuvent être suspendus par le biais de leurs côtés situés face aux fentes (6a, 6b) sur la barre de fixation (12), à la suite de quoi les lames de contact (8a, 8b) et le pion d'indexage (9) peuvent pivoter respectivement sur les fentes (6a, 6b) et l'ouverture d'ajustement (7), l'extrémité des arêtes des lames de contact (8a, 8b) étant biseautée afin que les points de contact de l'extrémité de l'arête des lames de contact (8a, 8b) s'engagent simultanément dans chaque fiche femelle (16).

12. Module enfichable jumelé selon l'une quelconque des revendications 7 à 11, **caractérisé en ce que** les trois barres de contact (1) sont destinées à une réalisation tripolaire, leurs languettes (15) étant ainsi divisées en parties capables de franchir une barre d'alimentation adjacente (1) sans entrer en contact avec elle.

13. Module enfichable jumelé selon la revendication 12, **caractérisé en ce que** la barre d'alimentation et les parties des languettes (15) sont couvertes par un capuchon protecteur en plastique (14) pour l'isolation.

14. Module enfichable jumelé selon la revendication 12, **caractérisé en ce que** la barre d'alimentation et les parties des languettes (15) sont recouvertes d'un film plastique isolant.

15. Module enfichable jumelé selon l'une quelconque des revendications 7 à 11, **caractérisé en ce que** les barres d'alimentation (25, 26, 27) et les barres neutres (28) sont interconnectées respectivement par le biais d'un câble multibrins (13) et d'un câble de connexion (4) flexibles.
